# EUROPÄISCHE PATENTSCHRIFT

(11) **EP 3 999 349 B1**
(45) Veröffentlichungstag und Bekanntmachung des Hinweises auf die Patenterteilung: **10.04.2024**
(21) Anmeldenummer: 20737154.3
(22) Anmeldetag: 06.07.2020
(51) Int. Cl.: B41J 3/407, G01N 1/06, G01N 35/00

(54) **DRUCKER ZUM BEDRUCKEN VON HISTOLOGIELABOR-VERBRAUCHSARTIKELN**
PRINTER FOR PRINTING ON HISTOLOGY LABORATORY CONSUMABLES
IMPRIMANTE POUR IMPRIMER DES ARTICLES DE CONSOMMATION POUR LABORATOIRE D'HISTOLOGIE

(30) Priorität: 18.07.2019 DE 102019119507
(43) Veröffentlichungstag der Anmeldung: 25.05.2022
(73) Patentinhaber: Leica Biosystems Nussloch GmbH, 69226 Nussloch (DE)
(72) Erfinder: WESTERHOFF, Karl-Heinz, 75031 Eppingen (DE)
(74) Vertreter: Hoffmann, Jürgen
(86) Internationale Anmeldenummer: PCT/EP2020/068975
(87) Internationale Veröffentlichungsnummer: WO 2021/008918

(56) Entgegenhaltungen:
- DE-U1-202004 006 265
- JP-A- 2002 509 822
- US-A1- 2009 223 390

## Beschreibung

Die Erfindung betrifft einen Drucker zum Bedrucken von Histologielabor-Verbrauchsartikeln mit einer Steuerungsvorrichtung, die dazu ausgebildet ist, analoge oder digitale Bildsignale eines Sollaufdruckbildmusters zu empfangen, und mit einer optischen Lesevorrichtung.

Von einem Patienten entnommene histologische Proben durchlaufen in einem histologischen Labor eine Vielzahl von Behandlungsschritten in verschiedenen Behandlungsstationen, bevor diese, beispielsweise mit einem Mikroskop, untersucht werden können.

Ziel der Behandlung einer histologischen Probe ist es zumeist, diese in einen Zustand zu versetzen, der ein Schneiden in dünne Schichten mit einem Mikrotom erlaubt. Diese Behandlung findet in mehreren Bearbeitungsstationen statt. Eine Schneidbarkeit kann beispielsweise dadurch ermöglicht werden, dass in mehreren, aufeinander folgenden Bearbeitungsschritten in das Gewebe ein mechanisch stabilisierendes Medium eingebracht (infiltriert) wird. Hierfür durchlaufen die Proben zumeist eine Vielzahl von Bearbeitungsstationen. Es sind beispielsweise Bearbeitungsstationen in Form von Zuschneidestationen, Fixierstationen, Dehydrierstationen, Reinigungsstationen, Infiltrationsstationen, Einbettstationen oder Mikrotomen (Schneidestationen) in verschiedensten Ausführungen bekannt. Das Fixieren, Dehydrieren, Reinigen und Infiltrieren kann beispielsweise nacheinander in einer Retorte eines einzigen Geräts erfolgen.

In einer Zuschneidestation wird das beispielsweise von einem Patienten entnommene Gewebe in einzelne Proben geschnitten. Die Proben werden zumeist in Kassetten eingelegt und zu einer Fixierstation transportiert. Eine Fixierung der Proben ist notwendig, weil die Sauerstoffversorgung der Zellen nach der Entnahme des Gewebes vom Patienten unterbunden ist, was zum Zelltod führt. Zuerst lässt sich ein Anschwellen der Zellen beobachten und zudem kommt es zu einer Proteindenaturierung und einer Autolyse mit anschließendem bakteriellen Verdau. Um diesen Schäden entgegenzuwirken, erfolgt in der Fixierstation eine Fixierung der entnommenen Proben mit einem Fixiermittel, wie beispielsweise Formalin.

Nach der Behandlung in der Fixierstation erfolgt eine Dehydrierung der Proben in einer Dehydrierstation. Eine Dehydrierung der Proben ist notwendig, um den nachfolgenden Prozess des Infiltrierens und des Einbettens zu ermöglichen. Da das Fixiermittel, insbesondere Formalin, zumeist ein wässriges Medium ist, während hingegen das zu verwendende Infiltrations- bzw. Einbettmittel, insbesondere Paraffin, zumeist ein mit Wasser nicht mischbares Medium ist, muss eine Dehydrierung der Proben vor der Weiterbehandlung der Proben in der Dehydrierstation erfolgen. Die Dehydrierung der Proben erfolgt mit Hilfe eines Dehydriermittels, wie beispielsweise Ethanol.

Vor einer Übergabe der Proben an die Infiltrationsstation werden diese außerdem gereinigt. Eine Reinigung ist notwendig, da der Alkohol im Gewebe der Probe mit Paraffin nicht mischbar ist. Der Alkohol muss daher vor dem Infiltrieren aus dem Gewebe entfernt und durch ein mit Paraffin mischbare Reagenz, wie Xylol ersetzt werden. Nach einer Behandlung der Probe in der Reinigungsstation wird diese zu einer Infiltrationsstation gebracht. In der Infiltrationsstation wird ein Infiltrationsmittel, das meistens dem später zum Einsatz kommenden Einbettmittel entspricht, in Hohlräume der Probe bis zur deren Sättigung eingebracht. Durch das Zuführen des Infiltrationsmittels können die Proben mechanisch stabilisiert werden.

Im Anschluss an die Behandlung der Probe in der Infiltrationsstation wird diese in der Einbettstation bearbeitet. In der Einbettstation erfolgt eine Einbettung der histologischen Probe in ein Einbettmittel, wie beispielsweise Paraffin oder Wachs. In der Praxis wird der Begriff "einbetten" doppelt gebraucht. Zum einen wird der Begriff als Synonym für "infiltrieren", das in der zuvor genannten Infiltrationsstation erfolgt, zum anderen wird der Begriff auch für das "Einblocken" gebraucht, was in der Einbettstation erfolgt.

Zum Einbetten werden die Proben aus der Kassette herausgenommen und in Formen, sogenannte Molds, zusammen mit der Kassette eingelegt, die mit dem Einbettmittel aufgefüllt werden. Anschließend erfolgt ein Abkühlen, so dass das Einbettmittel aushärten kann. Zum Kühlen werden die Formen (Molds) zumeist auf eine Kühlplatte der Einbettstation gesetzt. Im Ergebnis entsteht ein Einbettblock, in dem die Probe ortsfest an der Kassette fixiert ist. Nach einem Aushärten des Einbettmittels kann die Kassette in ein Mikrotom eingespannt und die Probe mit dem Mikrotom in einzelne dünne Probenschnitte geschnitten werden, die auf einem Objektträger abgelegt und in einem nächsten Schritt gefärbt und mit einem Mikroskop untersucht werden können.

Im Prozessablauf muss insbesondere sichergestellt sein, dass die Proben bzw. die Probenschnitte dem Patienten jederzeit zugeordnet werden können. Dazu werden in histologischen Labors spezielle Drucker verwendet, mit denen die Kassetten, in denen die Proben untergebracht werden sollen, und/oder die Objektträger, auf denen die Probenschnitte abgelegt werden, und/oder die Histologielabor-Verbrauchsartikel-Etiketten, insbesondere Klebeetiketten, insbesondere mit patientenrelevanten Daten bedruckt werden können. Hierbei ist es von großer Wichtigkeit, dass der Aufdruck ausreichend genau und ausreichend dauerhaft ablesbar ist.

Aus EP 1 245 395 A2 ist ein Verfahren und eine Vorrichtung zum Bedrucken von Kunststoff-Kassetten für histologische Präparate und/oder von Objektträgern für mikroskopische Dünnschnitte beschrieben. Die Vorrichtung weist eine Rechnereinrichtung zum Steuern der Druckeinrichtung auf. Die Druckeinrichtung beinhaltet einen Tintenstrahldrucker zum Bedrucken der Kassetten und/oder der Objektträger. Die Tinte wird über eine Warmlufttrocknung vorgetrocknet und über eine Blitzeinrichtung durchgetrocknet.

Aus US 2019/0105021 A1 ist ein System zum Identifizieren einer Kennung auf einer Gewebekassette in einer Anordnung mehrerer Gewebekassetten bekannt. Das System weist einen Sensor auf, der automatisch eine Kennung auf einer einzelnen Gewebekassette oder ein Bild der mehreren Gewebekassetten in der Anordnung erfasst. Das System kann einen Prozessor enthalten, der eine Kennung mit einem Gewebeverarbeitungsprotokoll vergleichen kann.

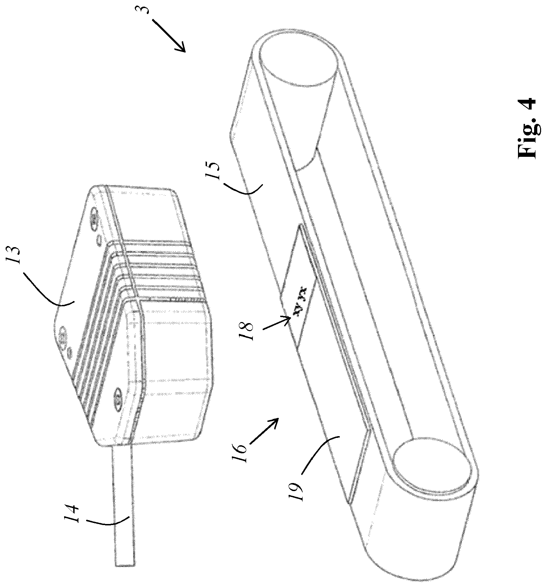

US 2019/0324048 A1 offenbart einen Objektträgerdrucker, der zwei Barcodes auf einen Objektträger aufdruckt. Ein erster Barcode betrifft eine Kontrollgewebeprobe, während ein zweiter Barcode eine Patientengewebeprobe betrifft. Der Objektträgerdrucker beinhaltet einen Barcodeleser, der den ersten von dem Objektträgerdrucker zuvor selbst gedruckten Barcode ablesen kann. DE 20 2004 006 265 offenbart ein Mikrotom. Das Mikrotom beinhaltet eine Kassettenkodierungsleseeinrichtung (54), die eine Kassettencodierung 45 von einer aus einem angelieferten Magazin 60 entnommenen Kassette 40 abliest, in der eine zu schneidende Probe 42 abgelegt ist (Figur 4).

Es ist die Aufgabe der vorliegenden Erfindung, einen Drucker zum Bedrucken von Histologielabor-Verbrauchsartikeln anzugeben, der die Sicherheit des Prozessablaufs bei der Bearbeitung von histologischen Proben erhöht.

Die Aufgabe wird durch einen Drucker zum Bedrucken von Histologielabor-Verbrauchsartikeln gelöst, der dadurch gekennzeichnet ist, dass die optische Lesevorrichtung ein von der Druckeinrichtung auf einen Histologielabor-Verbrauchsartikel aufgedruckten Aufdruck abliest, analoge oder digitale Aufdruck-Bildsignale bezüglich des abgelesenen Aufdrucks erzeugt und die Aufdruck-Bildsignale an die Steuerungsvorrichtung übergibt, die die von der optischen Lesevorrichtung empfangenen Aufdruck-Bildsignale durch Vergleichen mit den analogen oder digitalen Bildsignalen des Sollaufdruckbildmusters auswertet und wenigstens einen Qualitätsparameter bezüglich des Aufdrucks ermittelt.

Die Erfindung hat den ganz besonderen Vorteil, dass die Zuordenbarkeit des Histologielabor-Verbrauchsartikels zu einer bestimmten Probe bzw. zu einem bestimmten Patienten gewährleistet ist, indem überprüft wird, ob der jeweilige Aufdruck einwandfrei erfolgt ist. Hierdurch wird vorteilhaft sichergestellt, dass das Ablesen des Aufdrucks maschinell und/oder durch eine Person während der nachfolgenden Prozessschritte bei der Bearbeitung der Probe stets zuverlässig erfolgen kann.

Die Erfindung ermöglicht es zu erkennen, ob der Aufdruck mit einer für ein späteres Ablesen durch eine Person und/oder durch einen Automaten ausreichenden Qualität erfolgt ist. Sollte sich beispielsweise herausstellen, dass der Aufdruck unscharf und/oder verwischt ist, kann beispielsweise eine Warnmeldung ausgegeben werden. Es ist alternativ oder zusätzlich beispielsweise auch möglich, einen fehlerhaft bedruckten Histologielabor-Verbrauchsartikel auszusortieren, das Aufdrucken des gewünschten Aufdrucks auf einen anderen Histologielabor-Verbrauchsartikel zu wiederholen, um so den Histologielabor-Verbrauchsartikel mit dem fehlerhaften Aufdruck durch den anderen Histologielabor-Verbrauchsartikel mit einem einwandfreien Aufdruck zu ersetzen.

Der Aufdruck, den der Drucker aufbringt, kann einfarbig oder alternativ auch mehrfarbig sein.

Die Steuerungsvorrichtung wertet die von der optischen Lesevorrichtung empfangenen Aufdruck-Bildsignale aus, was zumindest ein Vergleichen der empfangenen Aufdruck-Bildsignale mit den analogen oder digitalen Bildsignalen des zugehörigen Sollaufdruckbildmusters beinhaltet. Insbesondere kann vorteilhaft vorgesehen sein, dass die Steuerungsvorrichtung die von der optischen Lesevorrichtung empfangenen Aufdruck-Bildsignale mit den Bildsignalen des Sollaufdruckbildmusters durch Bildanalyse und/oder durch Mustererkennung vergleicht.

Der Drucker kann die analogen oder digitalen Bildsignale des Sollaufdruckbildmusters, das in Klarschrift oder in codierter Form insbesondere Patientendaten beinhalten kann, beispielsweise von einem übergeordneten Computer erhalten, an den der Drucker direkt oder über ein Netzwerk angeschlossen ist.

Vorzugsweise steuert die Steuerungsvorrichtung die Druckeinrichtung des Druckers so, dass ein Aufdruck auf den jeweiligen Histologielabor-Verbrauchsartikel aufgedruckt wird, der zu dem jeweiligen Sollaufdruckbildmuster möglichst gleich ist.

Die Steuerungsvorrichtung ermittelt wenigstens einen Qualitätsparameter bezüglich des Aufdrucks. Der Qualitätsparameter kann insbesondere die Schärfe des Aufdrucks und/oder den Kontrast des Aufdrucks und/oder die Druckauflösung des Aufdrucks und/oder die Exaktheit der Farbe bzw. der Farben des Aufdrucks und/oder die Konstanz der Farben bzw. der Farben des Aufdrucks und/oder dem Farbverlauf des Aufdrucks und/oder die Lage des Aufdrucks auf dem Histologielabor-Verbrauchsartikel betreffen. Qualitätsparameter kann insbesondere auch das Vorhandensein des Aufdrucks auf dem Histologielabor-Verbrauchsartikel betreffen. Sollte sich herausstellen, dass ein Aufdruck gar nicht erfolgt ist, kann beispielsweise eine Warnmeldung ausgegeben und/oder eine, insbesondere automatische, Überprüfung der Druckeinrichtung, insbesondere des Füllstandes mit Tinte bzw. Toner, durchgeführt werden.

Die Steuerungsvorrichtung wertet die von der optischen Lesevorrichtung empfangenen Aufdruck-Bildsignale durch Vergleichen mit den analogen oder digitalen Bildsignalen des Sollaufdruckbildmusters aus. In Abhängigkeit von dem Auswerteergebnis kann die Steuerungsvorrichtung wenigstens einen Bearbeitungsschritt für die weitere Bearbeitung des Histologielabor-Verbrauchsartikels innerhalb des Druckers festlegen.

Die Festlegung wenigstens eines Bearbeitungsschritts ist nicht zwingend abschließend. Beispielsweise kann die Steuerungsvorrichtung als Bearbeitungsschritt zunächst festlegen, dass eine Eingabe des Benutzers verlangt wird. Nach dem Erhalt der Eingabe und je nach der Entscheidung des Benutzers kann die Steuerungsvorrichtung dann weitere Bearbeitungsschritte festlegen.

Die Anforderung einer Eingabe von einem Benutzer kann insbesondere erfolgen, wenn festgestellt wurde, dass ein Aufdruck nicht, oder nicht einwandfrei erfolgt ist. In diesem Fall kann beispielsweise vorgesehen sein, dass der Benutzer den Histologielabor-Verbrauchsartikel in Augenschein nimmt und entweder freigibt oder eine Druckwiederholung des Sollaufdruckbildmusters auf einem anderen Histologielabor Verbrauchsartikel veranlasst.

Der Drucker kann eine Taste oder ein Tastenfeld und/oder eine andere Eingabevorrichtung aufweisen, mittels der der Benutzer eine Eingabe machen kann. Es ist alternativ oder zusätzlich auch möglich, dass die Eingabe über einen Computer eingegeben wird, an den der Drucker direkt oder über ein Netzwerk angeschlossen ist. Die Steuerungsvorrichtung wertet die Eingabe aus und kann dann in Abhängigkeit von dem Inhalt der Eingabe einen bereits festgelegten Bearbeitungsschritt löschen und/oder wenigstens einen weiteren Bearbeitungsschritt für die weitere Bearbeitung des Histologielabor-Verbrauchsartikels festlegen.

Bei einer ganz besonders vorteilhaften Ausführung kann die Steuerungsvorrichtung die weitere Bearbeitung eines Histologielabor-Verbrauchsartikels, bezüglich dem eine Eingabe erwartet wird, bis zum Eintreffen der Eingabe stoppen und stattdessen die Bearbeitung wenigstens eines anderen Histologielabor-Verbrauchsartikels beginnen oder fortsetzen. Diese Ausführung hat den ganz besonderen Vorteil, dass die zum Bedrucken einer Vielzahl von Histologielabor-Verbrauchsartikeln zur Verfügung stehende Zeit stets ausgenutzt wird. Insbesondere kann vorteilhaft vorgesehen sein, dass ein Histologielabor-Verbrauchsartikel, bezüglich dem einer Eingabe erwartet wird, vorrübergehen aussortiert und in einer Zwischenparkposition überführt wird. Sobald die erforderliche Eingabe erfolgt ist, wird der Histologielabor-Verbrauchsartikel von der Zwischenparkposition zurückgeholt und dann, insbesondere in Abhängigkeit von der erfolgten Eingabe, entweder weiterbearbeitet oder, vorzugsweise zu Gunsten der Wiederholung des Aufdrucks auf einem neuen Histologielabor-Verbrauchsartikel, aussortiert.

Es ist möglich, dass einer der Bearbeitungsschritte beinhaltet, eine Nachricht an einen Benutzer auszugeben. Beispielsweise kann der erfindungsgemäße Drucker derart eingerichtet sein, dass die Steuerungsvorrichtung die Nachricht ausgibt, dass alles in Ordnung ist, wenn die Steuerungsvorrichtung festgestellt hat, dass ein qualitativ hochwertiger Aufdruck aufgebracht wurde. Analog ist es auch möglich, dass eine Warnmeldung ausgeben wird, wenn die Steuerungsvorrichtung erkannt hat, dass kein qualitativ ausreichend guter Aufdruck erfolgt ist.

Bei einer ganz besonders vorteilhaften Ausführung legt die Steuerungsvorrichtung in Abhängigkeit von den Bildsignalen des abgelesenen Aufdrucks und/oder in Abhängigkeit von einem bezüglich des Aufdrucks ermittelten Qualitätsparameter wenigstens einen Druckparameter für die Wiederholung des Aufdruckens des Sollaufdruckbildmusters auf einem anderen Histologielabor-Verbrauchsartikel fest. Bei dieser Ausführung erfolgt der erneute Aufdruck auf einen anderen Histologielabor-Verbrauchsartikel vorteilhaft mit wenigstens einem veränderten Druckparameter, um einen erneuten fehlerhaften Aufdruck zu vermeiden. Die Steuerungsvorrichtung ändert vorzugsweise den Druckparameter (oder mehrere Druckparameter) spezifisch im Hinblick auf den festgestellten Fehler bzw. die festgestellte Art des Fehlers in dem zuvor erfolgten, fehlerhaften Aufdruck. Der Druckparameter kann beispielsweise die Tinte, insbesondere die Art der Tinte, oder den Toner, insbesondere die Art des Toners, oder eine Trocknungstemperatur oder eine Trocknungsdauer oder eine zu verwendende Schriftgröße oder eine zu verwendende Schriftart betreffen. Beispielsweise ist es möglich, dass die Steuerungsvorrichtung für einen erneuten Aufdruck eine andere Tinte aus einem anderen Tintentank des Druckers und/oder eine andere Trocknungsdauer auswählt.

Bei einer besonderen Ausführung speichert die Steuerungsvorrichtung jeweils die empfangenen Aufdruck-Bildsignale in einer Speichervorrichtung ab. Insbesondere kann vorteilhaft vorgesehen sein, dass die Steuerungsvorrichtung die empfangenen Aufdruck-Bildsignale jeweils zusammen mit den Bildsignalen des zugehörigen Sollaufdruckbildmusters abspeichert. Auf diese Weise kann auch zu einem späteren Zeitpunkt, insbesondere maschinell oder durch einen Benutzer, der Aufdruck mit dem Sollaufdruckbildmuster verglichen werden.

Der Drucker kann eine Transportvorrichtung aufweisen, die die Histologielabor-Verbrauchsartikel transportiert. Insbesondere kann der Drucker eine Aufnahme, insbesondere in Form einer Materialzuführung, für eine Vielzahl von zu bedruckenden Histologielabor-Verbrauchsartikeln aufweisen, aus der die Transportvorrichtung die zu bedruckenden Histologielabor-Verbrauchsartikel, insbesondere einzeln, entnimmt und zu der Druckeinrichtung weiter transportiert.

Bei einer besonders vorteilhaften Ausführung transportiert die Transportvorrichtung den von der Druckeinrichtung bedruckten Histologielabor-Verbrauchsartikel weiter zu einer Entnahmeeinrichtung, aus der der bedruckte Histologielabor-Verbrauchsartikel, insbesondere zusammen mit weiteren bedruckten Histologielabor-Verbrauchsartikeln, entnommen werden kann. Bei dieser Ausführung kann insbesondere vorteilhaft vorgesehen sein, dass die optische Lesevorrichtung den Aufdruck jeweils während des Transports von dem bedruckten Histologielabor-Verbrauchsartikel abliest. Dies hat den besonderen Vorteil, dass das Ablesen des Aufdrucks zeitlich parasitär erfolgen kann, so dass der gesamte Prozessablauf innerhalb des Druckers nicht verlangsamt wird.

Die Druckeinrichtung kann insbesondere dazu ausgebildet sein, einen als Bild oder als Barcode oder als QR-Code oder als Logo oder als Schriftzug ausgebildeten Aufdruck auf den Histologielabor-Verbrauchsartikel aufzubringen. Analog ist die optische Lesevorrichtung vorzugsweise dazu ausgebildet und angeordnet, einen als Bild oder als Barcode oder als QR-Code oder als Logo oder als Schriftzug ausgebildeten Aufdruck von einem Histologielabor-Verbrauchsartikel abzulesen.

Bei einer ganz besonders vorteilhaften Ausführung führt die Steuerungsvorrichtung ein Protokoll. Insbesondere kann vorteilhaft vorgesehen sein, dass für jeden einzelnen eingelegten Histologielabor-Verbrauchsartikel protokolliert wird, ob ein abgelesener Aufdruck ausgewertet werden konnte und/oder ob ein abgelesener Aufdruck fehlerfrei ist. Das Protokoll kann insbesondere die Bilddaten des abgelesenen Aufdrucks und/oder die Druckparameter bezüglich des vorgenommenen Aufdrucks beinhalten. Darüber hinaus kann das Protokoll Informationen über den Zeitpunkt der Bearbeitung des jeweiligen Histologielabor-Verbrauchsartikels und/oder über einen zugeordneten Patienten und/oder die Chargennummer des verwendeten Druckmediums und/oder die Chargennummer des verwendeten Histologielabor-Verbrauchsartikels beinhalten.

Vorzugsweise legt die Steuerungsvorrichtung die Protokolldaten fortlaufend in einem Speicher ab und/oder gibt die Protokolldaten über eine Schnittstelle aus. Es ist alternativ oder zusätzlich auch möglich, dass die Steuerungsvorrichtung die Protokolldaten auf einer Ausgabevorrichtung, beispielsweise einem Display des Druckers, anzeigt, insbesondere fortlaufend anzeigt.

Bei einer ganz besonders vorteilhaften Ausführung werden die Protokolldaten an einen übergeordneten Computer übertragen und dort gespeichert und/oder weiterverarbeitet.

Insbesondere - und nach einem eigenständigen Erfindungsgedanken - kann vorteilhaft vorgesehen sein, dass der übergeordnete Computer weitere Protokolldaten anderer Drucker und/oder anderer Laborgeräte empfängt und, insbesondere zusammen mit den Protokolldaten des Druckers, abspeichert und/oder weiter verarbeitet. Ganz allgemein und nach dem eigenständigen Erfindungsgedanken ist ein Histologie-Laborsystem von besonderem Vorteil, das einen übergeordneten Computer beinhaltet, der Protokolldaten von einem erfindungsgemäßen Drucker und/oder weitere Protokolldaten von anderen Laborgeräten empfängt, abspeichert und/oder weiterverarbeitet.

Vorzugsweise werden die Protokolldaten und die weiteren Protokolldaten, die dieselbe Probe betreffen, von dem übergeordneten Computer einander zugeordnet und gemeinsam abgespeichert und/oder weiterverarbeitet. Insbesondere ist es so ermöglicht, dass von dem übergeordneten Computer, insbesondere Probenspezifisch, ein übergeordnetes Protokoll erstellt wird, welches die von dem Drucker übermittelten Protokolldaten und die weiteren Protokolldaten anderer Drucker und/oder anderer Laborgeräte beinhaltet. Das übergeordnete Protokoll kann vorzugsweise Daten hinsichtlich sämtlicher Prozessschritte bei der Bearbeitung einer Probe in einem histologischen Labor beinhalten. Insoweit kann das übergeordnete Protokoll insbesondere Protokolldaten und weitere Protokolldaten beinhalten, die die Verarbeitung einer Probe von der Zuschneidestation bis zur Diagnose mittels eines Mikroskops beinhalten. Allerdings ist es auch möglich, dass das übergeordnete Protokoll Protokolldaten und weitere Protokolldaten eines Teilabschnitts eines solchen Bearbeitungsablaufs einer Probe beinhaltet.

Bei einer Variante erfolgt eine Protokollierung ausschließlich nur in den als problematisch erkannten Fällen, insbesondere wenn die Qualität des Aufdrucks nicht ausreichend ist.

Insbesondere kann einer der Bearbeitungsschritte beinhalten, die Bildsignale des abgelesenen Aufdrucks zu speichern und/oder eine durch die Steuerungsvorrichtung ermittelte Information über den Histologielabor-Verbrauchsartikel zu speichern. Dies kann insbesondere in der Weise erfolgen, dass eine Ablage der entsprechenden Daten in dem oben bereits erwähnten Protokoll erfolgt.

Der mittels des erfindungsgemäßen Druckers zu bedruckende Histologielabor-Verbrauchsartikel kann insbesondere eine Kassette, in der wenigstens eine histologische Probe untergebracht ist oder untergebracht werden soll, oder ein Objektträger, auf dem ein Probenschnitt abgelegt ist oder abgelegt werden soll, oder ein Etikett, insbesondere auch ein Klebeetikett, eines Histologielabor-Verbrauchsartikels sein. Vorzugsweise ist der Drucker dazu ausgebildet und bestimmt, Histologielabor-Verbrauchsartikel wenigstens eines der vorgenannten Arten von Histologielabor-Verbrauchsartikel mit einem Aufdruck zu versehen. Insoweit kann der Drucker speziell als Kassettendrucker und/oder als Objektträgerdrucker und/oder als Etikettendrucker ausgebildet sein.

Der erfindungsgemäße Drucker kann insbesondere als Tintenstrahldrucker oder als Laserdrucker ausgebildet sein.

Nach einem eigenständigen Erfindungsgedanken ist ein Drucker von besonderem Vorteil, mit einer Druckeinrichtung zum Bedrucken von Histologielabor-Verbrauchsartikeln, gekennzeichnet durch eine optische Lesevorrichtung, die ein von der Druckeinrichtung auf einen Histologielabor-Verbrauchsartikel aufgedruckten Aufdruck abliest, analoge oder digitale Aufdruck-Bildsignale bezüglich des abgelesenen Aufdrucks) erzeugt und die Aufdruck-Bildsignale an eine Steuerungsvorrichtung des Druckers übergibt. Der Drucker kann eines oder mehrere der oben genannten und/oder in den Ansprüchen erwähnten zusätzlichen Merkmale aufweisen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Druckers,
- Fig. 2: ein zweites Ausführungsbeispiel eines erfindungsgemäßen Druckers,
- Fig. 3: ein Detail eines dritten Ausführungsbeispiels eines erfindungsgemäßen Druckers, und
- Fig. 4: ein Detail eines vierten Ausführungsbeispiels eines erfindungsgemäßen Druckers.

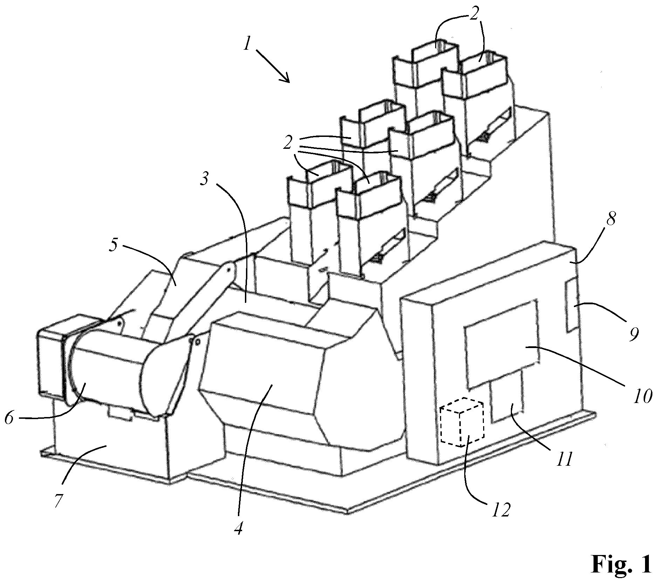

Figur 1 zeigt ein erstes Ausführungsbeispiel eines erfindungsgemäßen Druckers, der eine Materialzuführung 1 aufweist. Die Materialzuführung 1 beinhaltet mehrere Stapelmagazine 2 für (in dieser Figur nicht sichtbare) zu bedruckende Histologielabor-Verbrauchsartikel 16, wie beispielsweise Kassetten 17 oder Objektträger 19 oder Etiketten. Der Materialzuführung 1 ist eine Transportvorrichtung 3 zugeordnet, die jeweils nacheinander einen Histologielabor-Verbrauchsartikel 16 von der Materialzuführung 1 zu einer Druckeinrichtung 4 transportiert. Die Druckeinrichtung 4 kann beispielsweise einen Tintenstrahldrucker beinhalten. Die bedruckten Histologielabor-Verbrauchsartikel 16 werden von der Transportvorrichtung 3 zu einer Warmlufttrocknungsvorrichtung 5 geleitet und dort vorgetrocknet. Danach werden die Histologielabor-Verbrauchsartikel 16 an eine Blitzeinrichtung 6 geleitet, die für eine Durchtrocknung der Tinte durch Wärmezufuhr mit Infrarotstrahlung und/oder UV-Strahlung sorgt. Die so bearbeiteten Histologielabor-Verbrauchsartikel 16 werden anschließend zu einer Entnahmeeinrichtung 7 weitergeleitet.

Eine Steuerungsvorrichtung (8) ist dazu ausgebildet, analoge oder digitale Bildsignale eines Sollaufdruckbildmusters zu empfangen und die Druckeinrichtung 4 entsprechend zu steuern, um einen zu dem Sollaufdruckbildmuster möglichst gleichen Aufdruck auf den Histologielabor-Verbrauchsartikel 16 aufzudrucken.

Die Steuerungsvorrichtung 8 weist eine Schnittstelle 9 zum Anschließen des Druckers an ein Computernetzwerk oder zum unmittelbaren Anschließen an einen Computer auf. Die Steuerungsvorrichtung 8 empfängt die analogen oder digitalen Bildsignale des Sollaufdruckbildmusters, das in Klarschrift oder in codierter Form insbesondere Patientendaten beinhalten kann, beispielsweise von einem übergeordneten (in dieser Figur nicht dargestellten) Computer, an den der Drucker mittels der Schnittstelle 9 angeschlossen ist.

Der Drucker weist eine (in der Figur 1 nicht sichtbare) optische Lesevorrichtung 13 auf, die einen von der Druckeinrichtung 4 auf einen Histologielabor-Verbrauchsartikel 16 aufgedruckten Aufdruck 18 abliest und analoge oder digitale Aufdruck-Bildsignale bezüglich des abgelesenen Aufdrucks 18 erzeugt. Die Aufdruck-Bildsignale werden an die Steuerungsvorrichtung 8 des Druckers übergeben. Die Steuerungsvorrichtung 8 wertet die von der optischen Lesevorrichtung (13) empfangenen Aufdruck-Bildsignale durch Vergleichen mit den analogen oder digitalen Bildsignalen des Sollaufdruckbildmusters aus und ermittelt wenigstens einen Qualitätsparameter bezüglich des Aufdrucks (18). Der Qualitätsparameter kann dem Benutzer angezeigt werden und/oder zur Festlegung eines Bearbeitungsschritts für die weitere Bearbeitung des Histologielabor-Verbrauchsartikels (16) innerhalb des Druckers verwendet werden.

Die Steuerungsvorrichtung 8 weist darüber hinaus ein Display 10 auf, mittels dem Nachrichten an einen Benutzer ausgegeben werden können. Insbesondere kann das Display 10 auch dazu dienen, Eingaben von einem Benutzer anzufordern, die der Benutzer über eine Eingabevorrichtung 11, die beispielsweise ein Tastenfeld sein kann, eingeben kann. Das Display 10 kann beispielsweise auch dazu dienen, fortlaufend Informationen über die mittels der optischen Lesevorrichtung abgelesenen Aufdrucke 18 und/oder die Auswerteergebnisse hinsichtlich der abgelesenen Aufdrucke 18 anzuzeigen.

Die Steuerungsvorrichtung 8 beinhaltet eine Speichervorrichtung 12, in der die Steuerungsvorrichtung jeweils die empfangenen Aufdruck-Bildsignale jeweils zusammen mit den Bildsignalen des zugehörigen Sollaufdruckbildmusters abspeichert. Insbesondere kann in der Speichervorrichtung 12 vorteilhaft ein Protokoll abgelegt werden, das über die Schnittstelle 9 an einen angeschlossenen Computer weitergeleitet werden kann und/oder das auf dem Display 10 dargestellt werden kann.

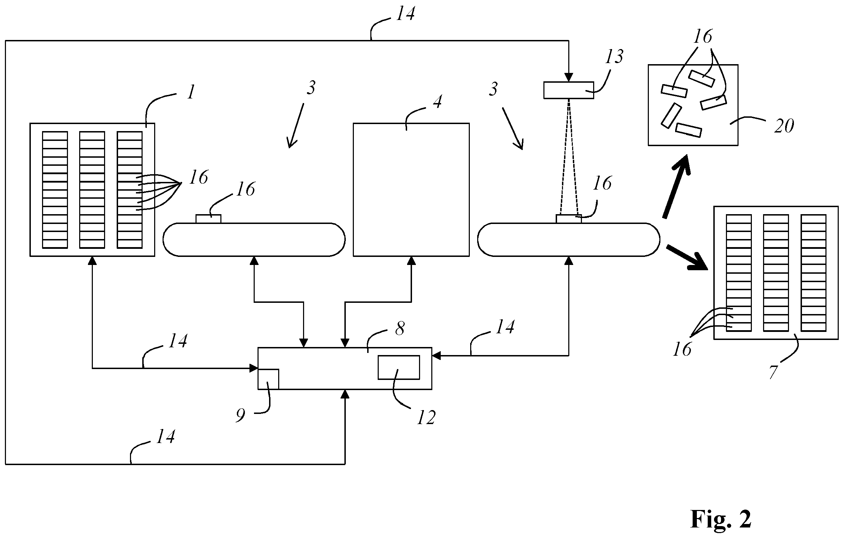

Figur 2 zeigt schematisch ein zweites Ausführungsbeispiel eines erfindungsgemäßen Druckers.

Der Drucker weist eine Materialzuführung 1 auf, in der zu bedruckende Histologielabor-Verbrauchsartikel 16, wie beispielsweise Kassetten 17 oder Objektträger 19 bevorratet werden können.

Der Drucker weist außerdem eine Transportvorrichtung 3 auf, die jeweils nacheinander einen Histologielabor-Verbrauchsartikel 16 von der Materialzuführung 1 zu einer Druckeinrichtung 4 transportiert. Außerdem transportiert die Transportvorrichtung 3 die von der Druckeinrichtung 4 bedruckten Histologielabor-Verbrauchsartikel 16 zu einer Entnahmeeinrichtung 7 weiter, aus der die bedruckten Histologielabor-Verbrauchsartikel 16 dann entnommen werden können.

Der Drucker weist außerdem eine optische Lesevorrichtung 13 auf, die ein von der Druckeinrichtung 4 auf einen Histologielabor-Verbrauchsartikel 16 aufgedruckten Aufdruck 18 abliest, während dieser von der Druckeinrichtung 4 weg transportiert wird. Die optische Lesevorrichtung 13 erzeugt analoge oder digitale Aufdruck-Bildsignale bezüglich des abgelesenen Aufdrucks 18 und übergibt die Aufdruck-Bildsignale an die Steuerungsvorrichtung 8. Die Steuerungsvorrichtung 8 weist eine Schnittstelle 9 zum Anschließen des Druckers an ein Computernetzwerk oder zum unmittelbaren Anschließen an einen Computer auf.

Die Steuerungsvorrichtung 8 ist mittels Datenkabeln 14 mit der Materialzuführung 1, der Transportvorrichtung 3 und der Druckeinrichtung 4 verbunden, um Daten zu empfangen und/oder Steuerbefehle auszugeben.

Die Steuerungsvorrichtung 8 wertet die von der optischen Lesevorrichtung 13 empfangenen Aufdruck-Bildsignale aus. Dies erfolgt durch Vergleichen der empfangenen Aufdruck-Bildsignale mit den analogen oder digitalen Bildsignalen des zugehörigen Sollaufdruckbildmusters. Die Steuerungsvorrichtung 8 des Druckers empfängt die analogen oder digitalen Bildsignale des Sollaufdruckbildmusters, das in Klarschrift oder in codierter Form insbesondere Patientendaten beinhalten kann, von einem übergeordneten (in dieser Figur nicht dargestellten) Computer, an den der Drucker mittels der Schnittstelle 9 angeschlossen ist. Insbesondere kann vorteilhaft vorgesehen sein, dass die Steuerungsvorrichtung 8 die Druckeinrichtung 4 entsprechend steuert, um jeweils einen zu dem Sollaufdruckbildmuster möglichst gleichen Aufdruck 18 auf den Histologielabor-Verbrauchsartikel aufzudrucken.

Wenn die Auswertung ergibt, dass der auf den jeweiligen Histologielabor-Verbrauchsartikel 16 aufgebrachte Aufdruck 18 fehlerfrei ist, steuert die Steuerungsvorrichtung 8 die Transportvorrichtung 3 derart, dass der Histologielabor-Verbrauchsartikel 16 zu der Entnahmeeinrichtung 7 transportiert wird.

Wenn die Auswertung ergibt, dass der auf den jeweiligen Histologielabor-Verbrauchsartikel 16 aufgebrachte Aufdruck 18 nicht fehlerfrei ist, wird der Histologielabor-Verbrauchsartikel 16 aussortiert. In diesem Fall steuert die Steuerungsvorrichtung 8 die Transportvorrichtung 3 derart, dass der Histologielabor-Verbrauchsartikel 16 zu einer weiteren Entnahmeeinrichtung 20 transportiert wird, aus der der Benutzer den fehlbedruckten Histologielabor-Verbrauchsartikel 16, insbesondere für eine nachfolgende Entsorgung, entnehmen kann.

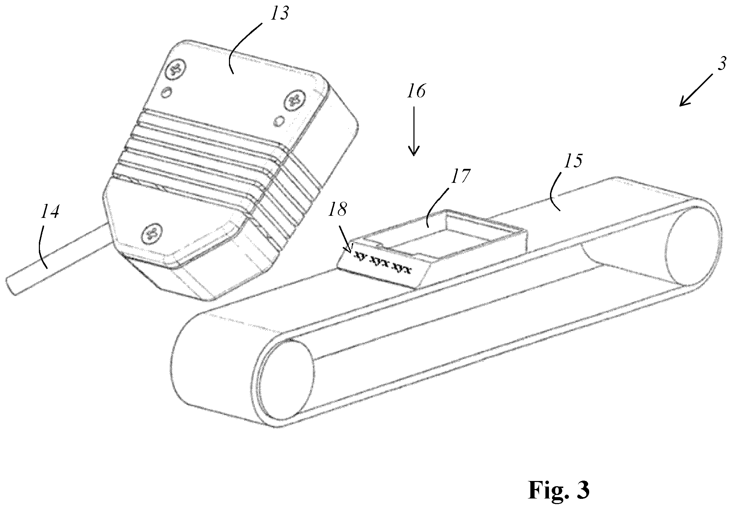

Figur 3 zeigt ein Detail eines dritten Ausführungsbeispiels eines erfindungsgemäßen Druckers, der eine Transporteinrichtung 3 aufweist. Die Transporteinrichtung 3 transportiert die Histologielabor-Verbrauchsartikel 16 weiter, die in einer (in dieser Figur nicht dargestellten) Druckeinrichtung 4 mit einem Aufdruck versehen wurden. Die Transporteinrichtung 3 weist ein Transportband 15 auf, auf dem die Histologielabor-Verbrauchsartikel 16, nämlich Kassetten 17, transportiert werden.

Der Drucker beinhaltet eine optische Lesevorrichtung 13, die beispielsweise als digitale Kamera ausgebildet sein kann. Die optische Lesevorrichtung 13 ist über ein Datenkabel 14 an eine (in dieser Figur nicht dargestellte) Steuerungsvorrichtung 8 angeschlossen. Die optische Lesevorrichtung 13 liest den Aufdruck 18 von jedem vorbeikommenden Histologielabor-Verbrauchsartikel 16 ab und leitet über das Datenkabel 14 analoge oder digitale Aufdruck-Bildsignale bezüglich des abgelesenen Aufdrucks 18 an die Steuerungsvorrichtung 8 weiter.

Figur 4 zeigt ein Detail eines dritten Ausführungsbeispiels eines erfindungsgemäßen Druckers, der eine Transporteinrichtung 3 aufweist. Die Transporteinrichtung 3 transportiert die Histologielabor-Verbrauchsartikel 16 weiter, die in einer (in dieser Figur nicht dargestellten) Druckeinrichtung 4 mit einem Aufdruck 18 versehen wurden. Die Transporteinrichtung 3 weist ein Transportband 15 auf, auf dem die Histologielabor-Verbrauchsartikel 16, nämlich Objektträger 19, transportiert werden.

Der Drucker beinhaltet eine optische Lesevorrichtung 13, die beispielsweise als digitale Kamera ausgebildet sein kann. Die optische Lesevorrichtung 13 ist über ein Datenkabel 14 an eine (in dieser Figur nicht dargestellte) Steuerungsvorrichtung 8 angeschlossen. Die optische Lesevorrichtung 13 liest den Aufdruck 18 von jedem vorbeikommenden Histologielabor-Verbrauchsartikel 16 ab und leitet über das Datenkabel 14 analoge oder digitale Aufdruck-Bildsignale bezüglich des abgelesenen Aufdrucks 18 an die Steuerungsvorrichtung 8 weiter.

### Bezugszeichenliste:

- 1: Materialzuführung
- 2: Stapelmagazin
- 3: Transportvorrichtung
- 4: Druckeinrichtung
- 5: Warmlufttrocknungsvorrichtung
- 6: Blitzeinrichtung
- 7: Entnahmeeinrichtung
- 8: Steuerungsvorrichtung
- 9: Schnittstelle
- 10: Display
- 11: Eingabevorrichtung
- 12: Speichervorrichtung
- 13: optische Lesevorrichtung
- 14: Datenkabel
- 15: Transportband
- 16: Histologielabor-Verbrauchsartikel
- 17: Kassette
- 18: Aufdruck
- 19: Objektträger
- 20: Weitere Entnahmeeinrichtung

## Patentansprüche

1. Drucker mit einer Druckeinrichtung (4) zum Bedrucken von Histologielabor-Verbrauchsartikeln (16) mit einer Steuerungsvorrichtung (8), die dazu ausgebildet ist, analoge oder digitale Bildsignale eines Sollaufdruckbildmusters zu empfangen, und mit einer optischen Lesevorrichtung (13), **dadurch gekennzeichnet, dass** die optische Lesevorrichtung (13) ein von der Druckeinrichtung (4) auf einen Histologielabor-Verbrauchsartikel (16) aufgedruckten Aufdruck (18) abliest, analoge oder digitale Aufdruck-Bildsignale bezüglich des abgelesenen Aufdrucks (18) erzeugt und die Aufdruck-Bildsignale an die Steuerungsvorrichtung (8) übergibt, die die von der optischen Lesevorrichtung (13) empfangenen Aufdruck-Bildsignale durch Vergleichen mit den analogen oder digitalen Bildsignalen des Sollaufdruckbildmusters auswertet und wenigstens einen Qualitätsparameter bezüglich des Aufdrucks (18) ermittelt.

2. Drucker nach Anspruch 1, **dadurch gekennzeichnet, dass** die Steuerungsvorrichtung (8) in Abhängigkeit von dem Auswerteergebnis wenigstens einen Bearbeitungsschritt für die weitere Bearbeitung des Histologielabor-Verbrauchsartikels (16) innerhalb des Druckers festlegt.

3. Drucker nach Anspruch 1 oder 2, **dadurch gekennzeichnet, dass** die Steuerungsvorrichtung (8) die von der optischen Lesevorrichtung (13) empfangenen Aufdruck-Bildsignale mit den Bildsignalen des Sollaufdruckbildmusters durch Bildanalyse und/oder durch Mustererkennung vergleicht.

4. Drucker nach einem der Ansprüche 1 bis 3, **dadurch gekennzeichnet, dass**
a. der Qualitätsparameter die Schärfe des Aufdrucks (18) betrifft und/oder dass
b. der Qualitätsparameter den Kontrast des Aufdrucks (18) betrifft und/oder dass
c. der Qualitätsparameter die Druckauflösung des Aufdrucks (18) betrifft und/oder dass
d. der Qualitätsparameter die Exaktheit der Farbe des Aufdrucks (18) betrifft und/oder dass
e. der Qualitätsparameter die Konstanz der Farbe des Aufdrucks (18) betrifft und/oder dass
f. der Qualitätsparameter den Farbverlauf des Aufdrucks (18) betrifft und/oder dass
g. der Qualitätsparameter die Lage des Aufdrucks (18) auf dem Histologielabor-Verbrauchsartikel (16) betrifft und/oder dass
h. der Qualitätsparameter das Vorhandensein des Aufdrucks (18) auf dem Histologielabor-Verbrauchsartikel (16) betrifft.

5. Drucker nach einem der Ansprüche 2 bis 4, **dadurch gekennzeichnet, dass**
a. einer der Bearbeitungsschritte beinhaltet, eine Eingabe von einem Benutzer anzufordern, oder dass
b. einer der Bearbeitungsschritte beinhaltet, eine Eingabe von einem Benutzer anzufordern, und die Steuerungsvorrichtung (8) die Eingabe auswertet und in Abhängigkeit von der Eingabe einen bereits festgelegten Bearbeitungsschritt löscht und/oder wenigstens einen weiteren Bearbeitungsschritt für die weitere Bearbeitung des Histologielabor-Verbrauchsartikels (16) festlegt, oder dass
c. einer der Bearbeitungsschritte beinhaltet, eine Eingabe von einem Benutzer anzufordern, und die Steuerungsvorrichtung (8) die Bearbeitung eines Histologielabor-Verbrauchsartikels (16), bezüglich dem eine Eingabe erwartet wird, bis zum Eintreffen der Eingabe stoppt und stattdessen die Bearbeitung wenigstens eines anderen Histologielabor-Verbrauchsartikels (16) beginnt oder fortsetzt, oder dass
d. einer der Bearbeitungsschritte beinhaltet, eine Nachricht an einen Benutzer auszugeben.

6. Drucker nach einem der Ansprüche 2 bis 4, **dadurch gekennzeichnet, dass**
a. einer der Bearbeitungsschritte beinhaltet, das Aufdrucken des Sollaufdruckbildmusters auf einem anderen Histologielabor-Verbrauchsartikel (16) zu wiederholen, oder dass
b. einer der Bearbeitungsschritte beinhaltet, das Aufdrucken des Sollaufdruckbildmusters auf einem anderen Histologielabor-Verbrauchsartikel (16) zu wiederholen, und dass die Steuerungsvorrichtung (8) in Abhängigkeit von den Bildsignalen des abgelesenen Aufdrucks (18) und/oder in Abhängigkeit von einem bezüglich des Aufdrucks (18) ermittelten Qualitätsparameter wenigstens einen Druckparameter für die Wiederholung des Aufdruckens des Sollaufdruckbildmusters auf einem anderen Histologielabor-Verbrauchsartikel (16) festlegt, oder dass
c. einer der Bearbeitungsschritte beinhaltet, das Aufdrucken des Sollaufdruckbildmusters auf einem anderen Histologielabor-Verbrauchsartikel (16) zu wiederholen, und dass die Steuerungsvorrichtung (8) in Abhängigkeit von den Bildsignalen des abgelesenen Aufdrucks (18) und/oder in Abhängigkeit von einem bezüglich des Aufdrucks (18) ermittelten Qualitätsparameter wenigstens einen Druckparameter für die Wiederholung des Aufdruckens des Sollaufdruckbildmusters auf einem anderen Histologielabor-Verbrauchsartikel (16) festlegt, wobei der Druckparameter die Tinte oder den Toner oder eine Trocknungstemperatur oder eine Trocknungsdauer oder eine zu verwendende Schriftgröße oder eine zu verwendende Schriftart betrifft.

7. Drucker nach einem der Ansprüche 1 bis 6, **dadurch gekennzeichnet, dass** die Steuerungsvorrichtung (8) jeweils die empfangenen Aufdruck-Bildsignale in einer Speichervorrichtung (12) abspeichert oder dass die Steuerungsvorrichtung (8) die empfangenen Aufdruck-Bildsignale jeweils zusammen mit den Bildsignalen des zugehörigen Sollaufdruckbildmusters abspeichert.

8. Drucker nach einem der Ansprüche 1 bis 7, **dadurch gekennzeichnet, dass**
a. der Drucker eine Transportvorrichtung (3) aufweist, die die Histologielabor-Verbrauchsartikel (16) transportiert, oder dass
b. der Drucker eine Transportvorrichtung (3) aufweist, die die Histologielabor-Verbrauchsartikel (16) transportiert, und eine Aufnahme für eine Vielzahl von zu bedruckenden Histologielabor-Verbrauchsartikeln (16) aufweist, aus der die Transportvorrichtung (3) die zu bedruckenden Histologielabor-Verbrauchsartikel (16) einzeln entnimmt und zu der Druckeinrichtung (4) weiter transportiert, oder dass
c. der Drucker eine Transportvorrichtung (3) aufweist, die die Histologielabor-Verbrauchsartikel (16) transportiert, und eine Aufnahme für eine Vielzahl von zu bedruckenden Histologielabor-Verbrauchsartikeln (16) aufweist, aus der die Transportvorrichtung (3) die zu bedruckenden Histologielabor-Verbrauchsartikel (16) einzeln entnimmt und zu der Druckeinrichtung (4) weiter transportiert, wobei die Transportvorrichtung (3) die von der Druckeinrichtung (4) bedruckten Histologielabor-Verbrauchsartikel (16), insbesondere zu einer Entnahmeeinrichtung (7), weiter transportiert, oder dass
d. der Drucker eine Transportvorrichtung (3) aufweist, die die Histologielabor-Verbrauchsartikel (16) transportiert, und eine Aufnahme für eine Vielzahl von zu bedruckenden Histologielabor-Verbrauchsartikeln (16) aufweist, aus der die Transportvorrichtung (3) die zu bedruckenden Histologielabor-Verbrauchsartikel (16) einzeln entnimmt und zu der Druckeinrichtung (4) weiter transportiert, wobei die Transportvorrichtung (3) die von der Druckeinrichtung (4) bedruckten Histologielabor-Verbrauchsartikel (16), insbesondere zu einer Entnahmeeinrichtung (7), weiter transportiert und die optische Lesevorrichtung (13) den Aufdruck (18) jeweils während des Transports von dem bedruckten Histologielabor-Verbrauchsartikel (16) abliest.

9. Drucker nach einem der Ansprüche 1 bis 8, **dadurch gekennzeichnet, dass**
a. die Druckeinrichtung (4) dazu ausgebildet ist, einen als Bild oder als Barcode oder als QR-Code oder als Logo oder als Schriftzug ausgebildeten Aufdruck (18) auf den Histologielabor-Verbrauchsartikel aufzubringen, und/oder dass
b. die optische Lesevorrichtung (13) dazu ausgebildet und angeordnet ist, einen als Bild oder als Barcode oder als QR-Code oder als Logo oder als Schriftzug ausgebildeten Aufdruck (18) abzulesen.

10. Drucker nach einem der Ansprüche 1 bis 9, **dadurch gekennzeichnet, dass**
a. die Steuerungsvorrichtung (8) fortlaufend ein Protokoll führt, oder dass
b. die Steuerungsvorrichtung (8) fortlaufend ein Protokoll führt und, insbesondere fortlaufend, Protokolldaten in einem Speicher ablegt und/oder über eine Schnittstelle ausgibt und/oder auf einer Ausgabevorrichtung anzeigt.

11. Drucker nach einem der Ansprüche 1 bis 10, **dadurch gekennzeichnet, dass** der Drucker als Tintenstrahldrucker oder als Laserdrucker ausgebildet ist.

12. Drucker nach einem der Ansprüche 1 bis 11, **dadurch gekennzeichnet, dass** der Drucker als Kassettendrucker und/oder als Objektträgerdrucker und/oder als Etikettendrucker ausgebildet ist.

13. Drucker nach einem der Ansprüche 1 bis 12, **dadurch gekennzeichnet, dass** Histologielabor-Verbrauchsartikel (16) eine Kassette (17) oder ein Objektträger (19) oder ein Etikett ist.

14. Histologie-Laborsystem, das einen Drucker nach einem der Ansprüche 1 bis 13 sowie einen übergeordneten Computer aufweist, der Protokolldaten von dem Drucker empfängt.

15. Histologie-Laborsystem nach Anspruch 14, **dadurch gekennzeichnet, dass**
a. der übergeordnete Computer weitere Protokolldaten anderer Drucker und/oder anderer Laborgeräte empfängt, oder dass
b. der übergeordnete Computer weitere Protokolldaten anderer Drucker und/oder anderer Laborgeräte empfängt und jeweils die Protokolldaten und die weiteren Protokolldaten, die dieselbe Probe betreffen, einander zugeordnet und gemeinsam abspeichert und/oder weiterverarbeitet.

## Claims

1. Printer having a printing device (4) for printing on histology-laboratory consumable articles (16) having a control apparatus (8), which is configured to receive analogue or digital image signals of a target impression image pattern, and having an optical reading apparatus (13), **characterized in that** the optical reading apparatus (13) reads an impression (18) printed on a histology-laboratory consumable article (16) by the printing device (4), generates analogue or digital impression image signals relating to the impression (18) that has been read, and transfers the impression image signals to the control apparatus (8), which evaluates the impression image signals received from the optical reading apparatus (13) by comparing them with the analogue or digital image signals of the target impression image pattern and determines at least one quality parameter relating to the impression (18).

2. Printer according to Claim 1, **characterized in that**, in dependence on the evaluation result, the control apparatus (8) establishes at least one processing step for the further processing of the histology-laboratory consumable article (16) inside the printer.

3. Printer according to Claim 1 or 2, **characterized in that** the control apparatus (8) compares the impression image signals received from the optical reading apparatus (13) with the image signals of the target impression image pattern by image analysis and/or pattern recognition.

4. Printer according to one of Claims 1 to 3, **characterized in that**
a. the quality parameter relates to the sharpness of the impression (18) and/or **in that**
b. the quality parameter relates to the contrast of the impression (18) and/or **in that**
c. the quality parameter relates to the printing resolution of the impression (18) and/or **in that**
d. the quality parameter relates to the exactness of the colour of the impression (18) and/or **in that**
e. the quality parameter relates to the constancy of the colour of the impression (18) and/or **in that**
f. the quality parameter relates to the colour gradient of the impression (18) and/or **in that**
g. the quality parameter relates to the location of the impression (18) on the histology-laboratory consumable article (16) and/or **in that**
h. the quality parameter relates to the presence of the impression (18) on the histology-laboratory consumable article (16).

5. Printer according to one of Claims 2 to 4, **characterized in that**
a. one of the processing steps involves requesting an input by a user, or **in that**
b. one of the processing steps involves requesting an input by a user, and the control apparatus (8) evaluates the input and, in dependence on the input, deletes an already established processing step and/or establishes at least one further processing step for the further processing of the histology-laboratory consumable article (16), or **in that**
c. one of the processing steps involves requesting an input by a user, and the control apparatus (8) stops the processing of a histology-laboratory consumable article (16) in relation to which an input is expected until the input arrives and instead begins or continues the processing of at least one other histology-laboratory consumable article (16), or **in that**
d. one of the processing steps involves outputting a message to a user.

6. Printer according to one of Claims 2 to 4, **characterized in that**
a. one of the processing steps involves repeating the printing of the target impression image pattern on another histology-laboratory consumable article (16), or **in that**
b. one of the processing steps involves repeating the printing of the target impression image pattern on another histology-laboratory consumable article (16), and **in that**, in dependence on the image signals of the impression (18) that has been read and/or in dependence on a quality parameter determined relating to the impression (18), the control apparatus (8) establishes at least one printing parameter for the repetition of the printing of the target impression image pattern on another histology-laboratory consumable article (16), or **in that**
c. one of the processing steps involves repeating the printing of the target impression image pattern on another histology-laboratory consumable article (16), and **in that**, in dependence on the image signals of the impression (18) that has been read and/or in dependence on a quality parameter determined relating to the impression (18), the control apparatus (8) establishes at least one printing parameter for the repetition of the printing of the target impression image pattern on another histology-laboratory consumable article (16), wherein the printing parameter relates to the ink or the toner or a drying temperature or a drying duration or a font size to be used or a font type to be used.

7. Printer according to one of Claims 1 to 6, **characterized in that** the control apparatus (8) respectively saves the received impression image signals in a memory apparatus (12) or **in that** the control apparatus (8) respectively saves the received impression image signals together with the image signals of the associated target impression image pattern.

8. Printer according to one of Claims 1 to 7, **characterized in that**
a. the printer comprises a transporting apparatus (3), which transports the histology-laboratory consumable articles (16), or **in that**
b. the printer comprises a transporting apparatus (3), which transports the histology-laboratory consumable articles (16), and a compartment for a multiplicity of histology-laboratory consumable articles (16) to be printed on, from which the transporting apparatus (3) individually takes the histology-laboratory consumable articles (16) to be printed on and transports them further to the printing device (4), or **in that**
c. the printer comprises a transporting apparatus (3), which transports the histology-laboratory consumable articles (16), and a compartment for a multiplicity of histology-laboratory consumable articles (16) to be printed on, from which the transporting apparatus (3) individually takes the histology-laboratory consumable articles (16) to be printed on and transports them further to the printing device (4), wherein the transporting apparatus (3) transports the histology-laboratory consumable articles (16) printed on by the printing device (4) further, in particular to a removal device (7), or **in that**
d. the printer comprises a transporting apparatus (3), which transports the histology-laboratory consumable articles (16), and a compartment for a multiplicity of histology-laboratory consumable articles (16) to be printed on, from which the transporting apparatus (3) individually takes the histology-laboratory consumable articles (16) to be printed on and transports them further to the printing device (4), wherein the transporting apparatus (3) transports the histology-laboratory consumable articles (16) printed on by the printing device (4) further, in particular to a removal device (7), and the optical reading apparatus (13) reads the impression (18) respectively during the transport of the histology-laboratory consumable article (16) that has been printed on.

9. Printer according to one of Claims 1 to 8, **characterized in that**
a. the printing device (4) is configured to apply an impression (18) configured as an image or as a barcode or as a QR code or as a logo or as text onto the histology-laboratory consumable article, and/or **in that**
b. the optical reading apparatus (13) is configured and arranged to read an impression (18) configured as an image or as a barcode or as a QR code or as a logo or as text.

10. Printer according to one of Claims 1 to 9, **characterized in that**
a. the control apparatus (8) continuously keeps a log, or **in that**
b. the control apparatus (8) continuously keeps a log and, in particular continuously, saves log data in a memory and/or outputs them via an interface and/or displays them on an output device.

11. Printer according to one of Claims 1 to 10, **characterized in that** the printer is configured as an inkjet printer or as a laser printer.

12. Printer according to one of Claims 1 to 11, **characterized in that** the printer is configured as a cassette printer and/or as a slide printer and/or as a label printer.

13. Printer according to one of Claims 1 to 12, **characterized in that** the histology-laboratory consumable article (16) is a cassette (17) or a slide (19) or a label.

14. Histology laboratory system, which comprises a printer according to one of Claims 1 to 13 and a superordinate computer, which receives log data from the printer.

15. Histology laboratory system according to Claim 14, **characterized in that**
a. the superordinate computer receives further log data of other printers and/or other laboratory equipment, or **in that**
b. the superordinate computer receives further log data of other printers and/or other laboratory equipment and respectively saves and/or further processes the log data and the further log data, which relate to the same sample, while being assigned to one another and together.

## Revendications

1. Imprimante pourvue d'un moyen d'impression (4) pour imprimer des consommables de laboratoire d'histologie (16), comprenant un dispositif de commande (8) qui est réalisé pour recevoir des signaux d'image analogiques ou numériques d'un motif d'image de surimpression de consigne, et un dispositif de lecture optique (13),
**caractérisée en ce que** le dispositif de lecture optique (13) lit une surimpression (18) imprimée par le moyen d'impression (4) sur un consommable de laboratoire d'histologie (16), génère des signaux d'image de surimpression analogiques ou numériques concernant la surimpression (18) lue, et transmet les signaux d'image de surimpression au dispositif de commande (8) qui évalue les signaux d'image de surimpression reçus du dispositif de lecture optique (13) par comparaison avec les signaux d'image analogiques ou numériques du motif d'image de surimpression de consigne et établit au moins un paramètre de qualité concernant la surimpression (18).

2. Imprimante selon la revendication 1, **caractérisée en ce que** le dispositif de commande (8) définit en fonction du résultat d'évaluation au moins une étape de traitement pour le traitement supplémentaire du consommable de laboratoire d'histologie (16) à l'intérieur de l'imprimante.

3. Imprimante selon la revendication 1 ou 2, **caractérisée en ce que** le dispositif de commande (8) compare les signaux d'image de surimpression reçus du dispositif de lecture optique (13) avec les signaux d'image du motif d'image de surimpression de consigne par analyse d'image et/ou par reconnaissance de motif.

4. Imprimante selon l'une quelconque des revendications 1 à 3, **caractérisée en ce que**
a) le paramètre de qualité concerne la netteté de la surimpression (18), et/ou **en ce que**
b) le paramètre de qualité concerne le contraste de la surimpression (18), et/ou **en ce que**
c) le paramètre de qualité concerne la résolution d'impression de la surimpression (18), et/ou **en ce que**
d) le paramètre de qualité concerne la justesse de la couleur de la surimpression (18), et/ou **en ce que**
e) le paramètre de qualité concerne la constance de la couleur de la surimpression (18), et/ou **en ce que**
f) le paramètre de qualité concerne le dégradé de couleur de la surimpression (18), et/ou **en ce que**
g) le paramètre de qualité concerne la position de la surimpression (18) sur le consommable de laboratoire d'histologie (16), et/ou **en ce que**
h) le paramètre de qualité concerne la présence de la surimpression (18) sur le consommable de laboratoire d'histologie (16).

5. Imprimante selon l'une quelconque des revendications 2 à 4, **caractérisée en ce que**
a) l'une des étapes de traitement comprend le fait de demander une saisie à un utilisateur, ou **en ce que**
b) l'une des étapes de traitement comprend le fait de demander une saisie à un utilisateur, et le dispositif de commande (8) évalue la saisie et supprime en fonction de la saisie une étape de traitement déjà définie, et/ou définit au moins une étape de traitement supplémentaire pour le traitement supplémentaire du consommable de laboratoire d'histologie (16), ou **en ce que**
c) l'une des étapes de traitement comprend le fait de demander une saisie à un utilisateur, et le dispositif de commande (8) arrête le traitement d'un consommable de laboratoire d'histologie (16) au sujet duquel une saisie est attendue jusqu'à l'arrivée de la saisie et commence ou continue au lieu de cela le traitement d'au moins un autre consommable de laboratoire d'histologie (16), ou **en ce que**
d) l'une des étapes de traitement comprend l'émission d'un message à un utilisateur.

6. Imprimante selon l'une quelconque des revendications 2 à 4, **caractérisée en ce que**
a) l'une des étapes de traitement comprend le fait de répéter la surimpression du motif d'image de surimpression de consigne sur un autre consommable de laboratoire d'histologie (16), ou **en ce que**
b) l'une des étapes de traitement comprend le fait de répéter la surimpression du motif d'image de surimpression de consigne sur un autre consommable de laboratoire d'histologie (16), et **en ce que** le dispositif de commande (8) définit en fonction des signaux d'image de la surimpression (18) lue et/ou en fonction d'un paramètre de qualité établi concernant la surimpression (18) au moins un paramètre d'impression pour répéter la surimpression du motif d'image de surimpression de consigne sur un autre consommable de laboratoire d'histologie (16), ou **en ce que**
c) l'une des étapes de traitement comprend le fait de répéter la surimpression du motif d'image de surimpression de consigne sur un autre consommable de laboratoire d'histologie (16), et **en ce que** le dispositif de commande (8) définit en fonction des signaux d'image de la surimpression (18) lue ou en fonction d'un paramètre de qualité établi concernant la surimpression (18) au moins un paramètre d'impression pour répéter la surimpression du motif d'image de surimpression de consigne sur un autre consommable de laboratoire d'histologie (16), dans laquelle le paramètre d'impression concerne l'encre ou le toner ou une température de séchage ou une durée de séchage ou une taille de caractères à utiliser ou une police de caractères à utiliser.

7. Imprimante selon l'une quelconque des revendications 1 à 6, **caractérisée en ce que** le dispositif de commande (8) enregistre respectivement les signaux d'image de surimpression reçus dans un dispositif de mémoire (12), ou **en ce que** le dispositif de commande (8) enregistre les signaux d'image de surimpression reçus respectivement avec les signaux d'image du motif d'image de surimpression de consigne associé.

8. Imprimante selon l'une quelconque des revendications 1 à 7, **caractérisée en ce que**
a) l'imprimante présente un dispositif de transport (3) qui transporte les consommables de laboratoire d'histologie (16), ou **en ce que**
b) l'imprimante présente un dispositif de transport (3) qui transporte les consommables de laboratoire d'histologie (16), et présente un logement pour une pluralité de consommables de laboratoire d'histologie (16) à imprimer parmi lesquels le dispositif de transport (3) prélève un par un les consommables de laboratoire d'histologie (16) à imprimer et les transporte plus loin jusqu'au moyen d'impression (4), ou **en ce que**
c) l'imprimante présente un dispositif de transport (3) qui transporte les consommables de laboratoire d'histologie (16), et présente un logement pour une pluralité de consommables de laboratoire d'histologie (16) à imprimer parmi lesquels le dispositif de transport (3) prélève un à un les consommables de laboratoire d'histologie (16) à imprimer et les transporte plus loin jusqu'au moyen d'impression (4), dans laquelle le dispositif de transport (3) transporte les consommables de laboratoire d'histologie (16) imprimés par le moyen d'impression (4) plus loin, en particulier jusqu'à un moyen de prélèvement (7), ou **en ce que**
d) l'imprimante présente un dispositif de transport (3) qui transporte les consommables de laboratoire d'histologie (16), et présente un logement pour une pluralité de consommables de laboratoire d'histologie (16) à imprimer parmi lesquels le dispositif de transport (3) prélève un à un les consommables de laboratoire d'histologie (16) à imprimer et les transporte plus loin jusqu'au moyen d'impression (4), dans laquelle le dispositif de transport (3) transporte les consommables de laboratoire d'histologie (16) imprimés par le moyen d'impression (4) plus loin, en particulier jusqu'à un moyen de prélèvement (7), et le dispositif de lecture optique (13) lit la surimpression (18) respectivement pendant le transport du consommable de laboratoire d'histologie (16) imprimé.

9. Imprimante selon l'une quelconque des revendications 1 à 8, **caractérisée en ce que**
a) le moyen d'impression (4) est réalisé pour appliquer une surimpression (18) réalisée sous forme d'image ou de code à barres ou de code QR ou de logo ou d'inscription sur le consommable de laboratoire d'histologie, et/ou **en ce que**
b) le dispositif de lecture optique (13) est réalisé et disposé pour lire une surimpression (18) réalisée sous forme d'image ou de code à barres ou de code QR ou de logo ou d'inscription.

10. Imprimante selon l'une quelconque des revendications 1 à 9, **caractérisée en ce que**
a) le dispositif de commande (8) tient un protocole en continu, ou **en ce que**
b) le dispositif de commande (8) tient un protocole en continu, en particulier enregistre en continu des données de protocole dans une mémoire et/ou les émet par l'intermédiaire d'une interface et/ou les affiche sur un dispositif de sortie.

11. Imprimante selon l'une quelconque des revendications 1 à 10, **caractérisée en ce que** l'imprimante est réalisée sous forme d'imprimante à jet d'encre ou d'imprimante laser.

12. Imprimante selon l'une quelconque des revendications 1 à 11, **caractérisée en ce que** l'imprimante est réalisée sous forme d'imprimante de cassettes et/ou d'imprimante de porte-objets et/ou d'imprimante d'étiquettes.

13. Imprimante selon l'une quelconque des revendications 1 à 12, **caractérisée en ce que** le consommable de laboratoire d'histologie (16) est une cassette (17) ou un porte-objet (19) ou une étiquette.

14. Système de laboratoire d'histologie qui présente une imprimante selon l'une quelconque des revendications 1 à 13 ainsi d'un ordinateur de niveau supérieur qui reçoit des données de protocole de l'imprimante.

15. Système de laboratoire d'histologie selon la revendication 14, **caractérisée en ce que**
a) l'ordinateur de niveau supérieur reçoit des données de protocole supplémentaires d'autres imprimantes et/ou d'autres instruments de laboratoire, ou **en ce que**
b) l'ordinateur de niveau supérieur reçoit des données de protocole supplémentaires d'autres imprimantes et/ou d'autres instruments de laboratoire et associe respectivement les données de protocole et les données de protocole supplémentaires qui concernent le même échantillon et les enregistre et/ou les traite ultérieurement ensemble.
